# EUROPÄISCHE PATENTSCHRIFT

(11) **EP 1 236 232 B1**
(45) Veröffentlichungstag und Bekanntmachung des Hinweises auf die Patenterteilung: **05.10.2005**
(21) Anmeldenummer: 00977333.4
(22) Anmeldetag: 01.12.2000
(51) Int. Cl.: H01M 4/48, H01M 4/50, H01M 4/52

(54) **ELEKTRODENMATERIAL FÜR POSITIVE ELEKTRODEN WIEDERAUFLADBARER LITHIUM-BATTERIEN**
ELECTRODE MATERIAL FOR POSITIVE ELECTRODES OF RECHARGEABLE LITHIUM BATTERIES
MATERIAU D'ELECTRODE POUR ELECTRODES POSITIVES DE PILES AU LITHIUM RECHARGEABLES

(30) Priorität: 03.12.1999 CH 221599
(43) Veröffentlichungstag der Anmeldung: 04.09.2002
(73) Patentinhaber: Ferro GmbH, 60327 Frankfurt (DE); Eidgenössische Technische Hochschule Zürich, 8092 Zürich (CH)
(72) Erfinder: COLUCCIA, Marcello, CH-6517 Arbedo (CH); NESPER, Reinhard, CH-8802 Kilchberg (CH); NOVAK, Petr, CH-5200 Brugg (CH)
(74) Vertreter: Groner, Manfred
(86) Internationale Anmeldenummer: PCT/CH2000/000641
(87) Internationale Veröffentlichungsnummer: WO 2001/041238

(56) Entgegenhaltungen:
- EP-A- 0 556 555
- EP-A- 0 696 075
- EP-A- 0 849 817
- EP-A- 0 918 041
- WO-A-00/23380

## Beschreibung

Die Erfindung betrifft ein Elektrodenmaterial für positive Elektroden nach dem Oberbegriff des Anspruchs 1. Die Erfindung betrifft zudem ein Verfahren zur Herstellung eines solchen Elektrodenmateriales.

Die EP 0 918 041 offenbart ein Elektrodenmaterial mit einer Schichtstruktur, die als Hauptkomponenten die Übergangsmetalle Ni und Co enthält und durch Dotierung mit Al, Fe, Mn und B stabilisiert ist . Ein Elektrodenmaterial mit Cobalt als Hauptkomponente ist ebenfalls in der EP 0 696 075 offenbart.

Wiederaufladbare Lithium-Batterien werden vor allem in tragbaren elektronischen Geräten wie beispielsweise Telefonapparaten, Computern und Filmapparaten verwendet. Diese Anwendungen stellen hohe Anforderungen an diese Batterien. Insbesondere sollen: sie pro Volumen und oder Gewicht möglichst viel Energie speichern. Zudem sollen sie sicher und umweltverträglich sein. Eine hohe Energiedichte und eine hohe spezifische Energie sind somit zwei grundlegende Anforderungen, die insbesondere an das Elektrodenmaterial solcher Batterien gestellt werden.

Eine weitere wesentliche Anforderung an ein solches Elektrodenmaterial ist die Zyklenstabilität, wobei ein Zyklus jeweils ein Lade- und ein Entladevorgang umfasst. Die Zyklenstabilität bestimmt im wesentlichen die nach mehreren Zyklen verfügbare spezifische Ladung. Selbst bei einer angenommenen Zyklenstabilität von 99% bei jedem Zyklus wäre die verfügbare spezifische Ladung nach 100 Zyklen lediglich 37% des anfänglichen Wertes. ein solcher vergleichsweise hoher Wert von 99% ist deshalb weitgehend ungenügend. Eine wiederaufladbare geeignete Hochleistungsbatterie der genannten Art sollte somit nicht nur eine bestimmte Energiemenge bei möglichst geringem Gewicht und Volumen speichern können, sondern es soll auch möglich sein, diese mehrere hundert Mal entladen und wieder aufladen zu können. Massgebend hierzu ist weitgehend das Elektrodenmaterial.

Aufgrund der grossen wirtschaftlichen Bedeutung solcher Batterien wurden grosse Anstrengungen unternommen, Materialien für die Elektroden zu finden, welche die obengenannten Anforderungen im möglichst hohem Mass gewährleisten.

Bisher wurden als Materialien für die positive Elektrode wiederaufladbarer Lithium-Batterien insbesondere Übergangsmetalloxide oder -sulfide, organische Moleküle und Polymere verwendet. In der Praxis haben sich insbesondere die Übergangsmetalloxide und Sulfide bewährt. Solche Materialien werden Einlagerungs- bzw. Insertionselektrodenmaterialien genannt und sind in vielen bei Raumtemperatur wieder- aufladbaren Batterien vorhanden. Der Grund für die weitere Verbreitung solcher Materialien kann darin gesehen werden, dass die elektrochemischen Einlagerungsreaktionen einfach und reversible sind.

Die Idee einer wiederaufladbaren Batterie aufgrund von Lithium-Einlagerungsreaktionen ist bereits in den 1970-Jahren entstanden und in der Zwischenzeit sind zahlreiche auf diesem Prinzip beruhende Elektroden vorgeschlagen und realisiert werden. Die Wiederaufladbarkeit von Lithium-Zellen beruht hauptsächlich auf der Dimensionsstabilität des Gastmaterials während dem Ein- und Auslagern von Li⁺.

Als gut reversibles Material für positive Elektroden sind wie erwähnt Übergangsmetalloxide bekannt. Insbesondere sind dies Lithiumcobaltoxide, Lithiumnickeloxide, Lithiummanganoxide und Lithiumvanadiumoxide. Diese Materialien sind aber teilweise ungeeignet. So sind die Lithiumcobaltoxide vergleichsweise teuer und nicht besonders umweltverträglich. Die Lithiummanganoxide wären aus Gründen der Umweltverträglichkeit besonders geeignet. Es hat sich jedoch gezeigt, dass diese Oxide in der Regel eine Spinellstruktur aufweisen und dadurch eine niedrigere spezifische Ladung haben oder nach dem Entfernen von Lithium unstabil sind. Versuche haben auch gezeigt, dass orthorhombisches Lithiummanganoxid beim Auslagern von Lithium in eine Spinellstruktur übergeht. Zum Stand der Technik wird hierbei auf die Publikation "Insertion Electrode Materials fcr Rechargeable Lithium Batteries" von Martin Winter, Jürgen O. Besenhard, Michael E. Spahr und Petr Novak in ADVANCED MATERIALS 1998, 10. November Nr. 10 Seiten 725 bis 763 sowie auf die Dissertation ETH Nr. 12281 von M.E. Spahr, "Synthese und Charakterisierung neuartiger Oxide, Kohlenstoffverbindungen, Silicide sowie nanostrukturierter Materialien und deren elektro- und magnetochemische Untersuchung" verwiesen.

Der Erfindung liegt die Aufgabe zugrunde, ein Elektrodenmaterial der genannten Art zur Verfügung zu stellen, das sich durch eine höhere Zyklenstabilität auszeichnet und das trotzdem kostengünstig herstellbar ist und sich auch sonst zur Herstellung von wiederaufladbaren Hochleistungsbatterien eignet. Das Elektrodenmaterial soll zudem vergleichsweise umweltverträglich sein.

Die Aufgabe ist bei einem Elektrodenmaterial cemäss Anspruch 1 gelöst. Versuche haben gezeigt, dass mit dem erfindungsgemässen Elektrodenmaterial positive Elektroden herstellbar sind, die über hunderte von Zyklen stabil sind oder sich sogar bezüglich der spezifischen Ladung verbessern. Diese hohe Zyklusstabilität ist überraschend und bildet einen Durchbruch in den seit vielen Jahren dauernden Bemühungen um die Verbesserung von Materialien fur Lithium-Batterien. Die höhere Zyklusstabilität ermöglicht eine Verlängerung der Lebensdauer der Batterien.

Bezüglich der Umweltverträglichkeit hat sich insbesondere die Verwendung von Mangan als vorteilhaft erwiesen. Mangan ist wesentlich umweltverträglicher als Cobalt und zudem auch kostengünstiger. Das Elektrodenmaterial ist auch bei vergleichsweise hohem Anteil von Mangan stabil.

Nach einer Weiterbildung der Erfindung weist das Lithium-Übergangsmetallmischoxid dotiertes Aluminium und/oder Bor auf. Mit Aluminium und/oder Bor dotiertes Übergangsmetallmischoxid hat sich als besonders zyklusstabil herausgestellt. Das Dotieren kann in an sich bekannter Weise durch Fällen mit einem Salz erfolgen. Als besonders vorteilhaft hat sich ein Dotieren mit Boroxid, Borsäure oder Lithiumborhydrid erwiesen. Lithiumborhydrid wird trocken zugegeben und vermutlich werden beim Dotieren mit Bor eingebaute Protonen entfernt. Geeignet ist auch ein gemischtes Dotieren mit Aluminium und Bor.

Dotiert wird vorzugsweise so, dass das Lithium-Übergangsmetallmischoxid mit 5-15 Mol% dotiert ist.

Weitere vorteilhafte Merkmale ergeben sich aus den abhängigen Patentansprüchen sowie der nachfolgenden Beschreibung.

Das geeignete Elektrodenmaterial weist eine zweidimensionale Schichtstruktur ähnlich derjenigen von LiNiO₂ auf und besitzt die allgemeine Formel Li (MI) (MII)O₂, wobei das eine Metall Mangan. und das andere Metall Nickel ist. In der Formel Li (Mnₓ Ni₁₋ₓ)O₂ liegt x im Bereich von 0,05 bis 0,5. Das erfindungsgemässe Elektrodenmaterial weist somit eine Schichtstruktur auf. Spinellstrukturen sind ausgeschlossen. Geringe Mengen (<0.05) anderer Übergangsmetalle können sich günstig auswirken.

Das Dotieren erfolgt in an sich bekannter Weise durch Ausfällen. Besonders geeignet sind Boroxide, Borsäure oder Lithiumborhydrid. Ebenfalls hat sich ein Dotieren mit Aluminium als vorteilhaft erwiesen. Aluminium und Bor können einzel oder in unterschiedlichen Anteilen dotiert werden.

Hergestellt und untersucht wurde ein Elektrodenmaterial mit der Zusammensetzung LiMn_{0,5}Ni_{0,4}Al_{0,1}O₂. Dieses Elektrodenmaterial war als positive Elektrode bezüglich der spezifischen Ladung (Ah/kg) über 200 Zyklen stabil. Die spezifische Ladung betrug konstant etwa 140 Ah/kg.

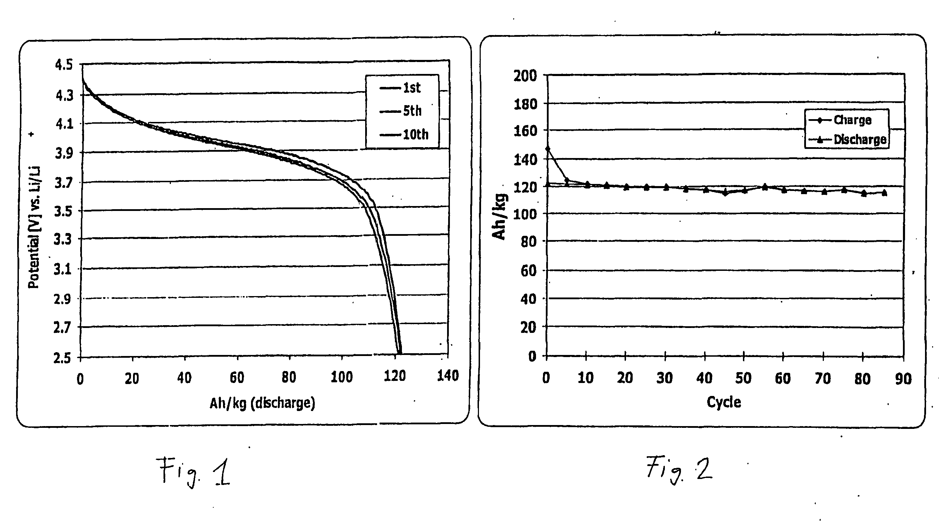

Das elektrochemische Zyklenverhalten eines typischen aluminiumdotierten Präparates ist in Figur 2 gezeigt. Der Einlagerungsbereich liegt im Mittel zwischen 3.9 und 4V. Die Figur 1 zeigt dazu die galvanostatische Entladungskurve.

Erfindungsgemäss wird somit ein Elektrodenmaterial vorgeschlagen, das nicht nur stabil ist, sondern auch kostengünstig hergestellt werden kann und zudem weitgehend umweltfreundlich ist.

In einer typischen Synthese werden molare Mengen der wasserlöslichen Metallsalze (z.B. Nitrate, Acetate oder Hydroxide) in Lösung mit stöchiometrischen Mengen LiOBr umgesetzt. Die entstehende Fällung wird mehrfach gewaschen, getrocknet und mit Lithiumhydroxid versetzt. Günstig ist ein geringer Überschuss, z.B. die 1,2-fache Menge Lithium bezogen auf den Gehalt an Metall. Das feste Präparat wird zwischen vier Stunden und zwei Tagen in einer oxidativen Atmosphäre vorzugsweise in Sauerstoff erhitzt. Vorzugsweise beträgt die Temperatur, bei welcher das feste Präparat erhitzt wird, weniger als 900°C vorzugsweise etwa 800°C. Es hat sich gezeigt, dass bei wesentlich höheren Temparaturen als 900°C sich die Nutzeigenschaften verschlechtern.

## Patentansprüche

1. Elektrodenmaterial für positive Elektroden wiederaufladbarer Lithium-Batterien, basierend auf einem Lithium-Übergangsmetalloxid, das ein Lithium-Übergangsmetallmischoxid mit wenigstens zwei Übergangsmetallen ist, eine Schichtstruktur aufweist und dotiert ist, **dadurch gekennzeichnet, dass** das Lithium-Übergangsmetallmischoxid als Übergangsmetalle Nickel und Mangan aufweist und die Formel Li(MnₓNi₁₋ₓ)O₂ aufweist, wobei x Im Bereich von 0,05-0,5 liegt.

2. Elektrodenmaterial nach Anspruch 1, **dadurch gekennzeichnet, dass** geringe Mengen anderer Übergangsmetalle, vorzugsweise weniger als 5% Inkorporiert sind. ,

3. Elektrodenmaterial nach Anspruch 1 oder 2, **dadurch gekennzeichnet, dass** das Lithium-Übergangsmetallmischoxid dotiertes Aluminium und/oder Bor aufweist, wobei der Anteil des dotierten Aluminiums vorzugsweise etwa 10 % und der Anteil des Bors zwischen 0 und 5 % beträgt.

4. Elektrodenmaterial nach einem der Ansprüche 1 bis 3, **dadurch gekennzeichnet, dass** das Lithium-Übergangsmetallmischoxid mit 5-26 Mol%, vorzugsweise 5-15 Mol% dotiert ist.

5. Verfahren zur Herstellung von Elektrodenmaterial nach Anspruch 1, **dadurch gekennzeichnet, dass** das Lithium-Übergangsmetallmischoxid mit wenigstens zwei Übergangsmetallen durch Dotierung stabilisiert wird.

6. Verfahren zur Herstellung von Elektrodenmaterial nach Anspruch 5, **dadurch gekennzeichnet, dass** das Lithium-Übergangsmetallmischoxid mittels Alkalimetallborhydrid, Borsäure und/oder Boroxid dotiert wird.

7. Verfahren nach Anspruch 5 oder 6, **dadurch gekennzeichnet, dass** das Lithium-Übergangsmetallmischoxid wenigstens anteilsweise mit Aluminium, vorzugsweise mit 10 bis etwa 20% Aluminium, vorzugsweise etwa 10% dotiert wird.

8. Verfahren nach einem der Ansprüche 5 bis 7, **dadurch gekennzeichnet, dass** das feste Präparat in einer oxidativen Atmosphäre erhitzt wird.

9. Verfahren nach einem der Ansprüche 6 bis 8, **dadurch gekennzeichnet, dass** das feste Präparat auf weniger als 900°C, vorzugsweise weniger als 850°C erhitzt wird.

## Claims

1. Electrode material for positive electrodes of rechargeable lithium batteries, based on a lithium transition-metal oxide that a lithium transition-metal mixed oxide with at least two transition-metals is and which has a layer structure and which is doped, **characterised in that** the lithium transition-metal mixed oxide contains as transition-metals nickel and manganese and has the formula Li (MnₓNi₁₋ₓ) O₂, wherein x lies in the range of 0.05-0.5.

2. Electrode material according to claim 1, **characterised in that** small amounts of other transition-metals, preferably less than 5%, are incorporated.

3. Electrode material according to any of claims 1 to 2, **characterised in that** the lithium transition-metal mixed oxide has doped aluminium and/or boron, wherein the doped aluminium content is preferably around 10% and the boron content is between 0 and 5%.

4. Electrode material according to any of claims 1 to 3, **characterised in that** the lithium transition-metal mixed oxide is doped with 5 - 25 mol%, preferably 5 - 15 mol%.

5. Method of producing electrode material according to claim 1, **characterised in that** lithium transition-metal mixed oxide with at least two transition metals is stabilised by doping.

6. Method of producing electrode material according to claim 5, **characterised in that** lithium transition-metal mixed oxide is doped by means of alkali metal boron hydride, boric acid and/or boric oxide.

7. Method according to claim 5 or 6, **characterised in that** the lithium transition-metal mixed oxide is doped at least partly with aluminium, preferably with 10 to around 20% aluminium, preferably around 10%.

8. Method according to any of claims 5 to 7, **characterised in that** the solid preparation is heated in an oxidative atmosphere.

9. Method according to any of claims 5 to 8, **characterised in that** the solid preparation is heated to less than 900°C, preferably less than 850°C.

## Revendications

1. Matériau d'électrode pour électrodes positives de piles au lithium rechargeables, se basant sur un oxyde de métal de transition et de lithium, qui est un oxyde mixte de métal de transition et de lithium pourvu d'au moins deux métaux de transition, qui comporte une structure en couches et est dopé, **caractérisé en ce que** l'oxyde mixte de métal de transition et de lithium comporte du nickel et du manganèse comme métaux de transition et présente la formule Li(MnₓNi₁₋ₓ)O₂, x étant compris entre 0,05 et 0,5.

2. Matériau d'électrode selon la revendication 1, **caractérisé en ce que** de petites quantités d'autres métaux de transition sont incorporées, de préférence moins de 5 %.

3. Matériau d'électrode selon la revendication 1 ou 2, **caractérisé en ce que** l'oxyde mixte de métal de transition et de lithium comporte de l'aluminium et/ou du bore dopé, la teneur en aluminium dopé s'élevant de préférence à environ 10 % et la teneur en bore étant comprise entre 0 et 5 %.

4. Matériau d'électrode selon l'une quelconque des revendications 1 à 3, **caractérisé en ce que** l'oxyde mixte de métal de transition et de lithium est dopé avec 5 à 25 % en moles, de préférence 5 à 15 % en moles.

5. Procédé de fabrication d'un matériau d'électrode selon la revendication 1, **caractérisé en ce que** l'oxyde mixte de métal de transition et de lithium avec au moins deux métaux de transition est stabilisé par dopage.

6. Procédé de fabrication d'un matériau d'électrode selon la revendication 5, **caractérisé en ce que** l'oxyde mixte de métal de transition et de lithium est dopé au moyen de borohydrure de métal alcalin, d'acide borique et/ou d'oxyde de bore.

7. Procédé selon la revendication 5 ou 6, **caractérisé en ce que** l'oxyde mixte de métal de transition et de lithium est dopé au moins partiellement avec de l'aluminium, de préférence avec 10 à environ 20 % d'aluminium, de préférence environ 10 %.

8. Procédé selon l'une quelconque des revendications 5 à 7, **caractérisé en ce que** la préparation solide est chauffée dans une atmosphère oxydante.

9. Procédé selon l'une quelconque des revendications 5 à 8, **caractérisé en ce que** la préparation solide est chauffée à moins de 900°C, de préférence à moins de 850°C.
